(19) **Europäisches Patentamt / European Patent Office / Office européen des brevets**

(11) **EP 4 726 812 A1**

(12) # EUROPEAN PATENT APPLICATION
published in accordance with Art. 153(4) EPC

(43) Date of publication:
**15.04.2026 Bulletin 2026/16**

(21) Application number: **24819228.8**

(22) Date of filing: **29.05.2024**

(51) International Patent Classification (IPC):
*H01M 4/62* (2006.01)    *C08F 212/02* (2006.01)
*C08F 212/36* (2006.01)    *C08F 220/04* (2006.01)
*C08F 220/12* (2006.01)    *H01M 4/04* (2006.01)
*C08F 220/20* (2006.01)    *C08F 222/02* (2006.01)
*C08F 236/04* (2006.01)    *H01G 11/38* (2013.01)
*H01M 4/13* (2010.01)    *H01M 4/139* (2010.01)

(52) Cooperative Patent Classification (CPC):
**H01M 4/0404; H01M 4/13; H01M 4/139;
H01M 4/622; Y02E 60/10**

(86) International application number:
**PCT/JP2024/019644**

(87) International publication number:
**WO 2024/252997 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.06.2023 JP 2023094673**

(71) Applicant: ENEOS Materials Corporation
**Tokyo 105-7109 (JP)**

(72) Inventors:
• **AZECHI, Motohisa**
  **Tokyo 105-7109 (JP)**
• **OHASHI, Taira**
  **Tokyo 105-7109 (JP)**

• **ITO, Toshiyuki**
  **Tokyo 105-7109 (JP)**
• **SHIMADA, Shingo**
  **Tokyo 105-7109 (JP)**
• **HONDA, Tatsuaki**
  **Tokyo 105-7109 (JP)**
• **HEIGUCHI, Sadatoshi**
  **Tokyo 105-7109 (JP)**
• **MIYABE, Toshitaka**
  **Tokyo 105-7109 (JP)**
• **MORI, Kazumasa**
  **Tokyo 105-7109 (JP)**

(74) Representative: **TBK**
    **Bavariaring 4-6**
    **80336 München (DE)**

(54) **POWER STORAGE DEVICE BINDER COMPOSITION, POWER STORAGE DEVICE ELECTRODE SLURRY, POWER STORAGE DEVICE ELECTRODE, AND POWER STORAGE DEVICE**

(57)    Provided is a binder composition for an electrical storage device, which enables the production of an electrical storage device electrode that is reduced in internal resistance and is excellent in adhesiveness. The binder composition for an electrical storage device includes a polymer (A) and a liquid medium (B). A value of a spin-spin relaxation time (T2) of the polymer (A) measured by pulsed NMR is 0.8 msec or less at 100°C. With respect to 100 mass% in total of repeating units contained in the polymer (A), the polymer (A) contains 0 mass% or more and 4 mass% or less of a repeating unit (a1) derived from an unsaturated carboxylic acid.

EP 4 726 812 A1

# EP 4 726 812 A1

## Description

### TECHNICAL FIELD

The present invention relates to a binder composition for an electrical storage device, a slurry for an electrical storage device electrode including the binder composition and an active material, an electrical storage device electrode formed by applying the slurry onto a current collector and drying the slurry, and an electrical storage device including the electrical storage device electrode.

### BACKGROUND ART

In recent years, an electrical storage device having a high voltage and a high energy density has been demanded as a power source for driving electronic equipment. A lithium ion battery, a lithium ion capacitor, or the like is promising as such electrical storage device.

An electrode to be used in such electrical storage device is produced by applying a composition (slurry for an electrical storage device electrode) including an active material and a polymer that functions as a binder to a surface of a current collector, and drying the composition. Examples of characteristics demanded of the polymer to be used as a binder may include: a binding ability between the active materials; an adhesive ability between the active material and the current collector; and powder fall-off resistance that prevents fine powder or the like of the active material from being detached from a coating film of the composition formed by applying and drying the composition (hereinafter also referred to as "active material layer") at the time of the cutting of the active material layer. Such binder material expresses satisfactory adhesiveness and reduces the internal resistance of an electrical storage device resulting from the binder material. Thus, a satisfactory charge-discharge characteristic can be imparted to the electrical storage device.

With regard to the binding ability between the active materials, the adhesive ability between the active material and the current collector, and the powder fall-off resistance described above, it has been empirically revealed that their qualities of performance have a nearly proportional relationship with each other. Accordingly, those properties are hereinafter sometimes collectively referred to with the term "adhesiveness".

Further, in recent years, research and development of an electric vehicle having mounted thereon an electrical storage device have been vigorously performed for the purpose of reducing an environmental load. When the electrical storage device is mounted as a driving power source for an electric vehicle, a high input-output characteristic that allows frequent repeated charge and discharge is required, and for this purpose, it is important to reduce the internal resistance of the electrical storage device.

Under such background, various binder materials have been proposed with a view to improving the reduction of the resistance of the electrical storage device (see, for example, Patent Literatures 1 and 2).

### CITATION LIST

#### Patent Literature

[PTL 1] WO 2015/012366 A1
[PTL 2] JP 2017-126456 A

### SUMMARY OF INVENTION

#### Technical Problem

However, the binder materials disclosed in Patent Literatures 1 and 2 above are not sufficient for achieving the low resistance at a high level, and have been required to be further improved in order to be applied to an electrical storage device serving as a driving power source for an electric vehicle.

Some aspects according to the present invention provide a binder composition for an electrical storage device, which enables the production of an electrical storage device electrode that is reduced in internal resistance and is excellent in adhesiveness.

#### Solution to Problem

The present invention has been made in order to solve at least part of the above-mentioned problems, and can be achieved as any one of the following aspects.

According to one aspect of the present invention, there is provided a binder composition for an electrical storage device, including:

a polymer (A); and
a liquid medium (B),
wherein a value of a spin-spin relaxation time (T2) of the polymer (A) measured by pulsed NMR is 0.8 msec or less at 100°C, and
wherein, with respect to 100 mass% in total of repeating units contained in the polymer (A), the polymer (A) contains 0 mass% or more and 4 mass% or less of a repeating unit (a1) derived from an unsaturated carboxylic acid.

In the binder composition for an electrical storage device according to the one aspect, the polymer (A) may further contain 10 mass% to 60 mass% of a repeating unit (a2) derived from a conjugated diene compound.

In the binder composition for an electrical storage device according to any one of the aspects, the polymer (A) may further contain 30 mass% to 85 mass% of a repeating unit (a3) derived from an aromatic vinyl compound.

In the binder composition for an electrical storage device according to any one of the aspects, the polymer (A) may further contain a repeating unit (a4) derived from an ethylenically unsaturated monomer having two or more ethylenically unsaturated bonds.

In the binder composition for an electrical storage device according to any one of the aspects, the liquid medium (B) may be water.

In the binder composition for an electrical storage device according to any one of the aspects, the polymer (A) may be polymer particles, and the polymer particles may have a Z-average particle diameter of 50 nm or more and 500 nm or less.

In the binder composition for an electrical storage device according to any one of the aspects, the polymer particles may satisfy a relationship of the following formula (3):

$$41.1 \times T2 + 2{,}237.4 \div PS + 48.3 < 100 \cdots\cdots (3)$$

in the formula (3), T2 represents a value of a spin-spin relaxation time (T2) of the polymer particles at 100°C measured by pulsed NMR, and PS represents a Z-average particle diameter (nm) of the polymer particles.

According to one aspect of the present invention, there is provided a slurry for an electrical storage device electrode, including:

the binder composition for an electrical storage device of any one of the above-mentioned aspects; and
an active material.

According to one aspect of the present invention, there is provided an electrical storage device electrode, including:

a current collector; and
an active material layer formed on a surface of the current collector by applying and drying the slurry for an electrical storage device electrode of the above-mentioned aspect.

According to one aspect of the present invention, there is provided an electrical storage device, including the electrical storage device electrode of the above-mentioned aspect.

Advantageous Effects of Invention

The binder composition for an electrical storage device according to the present invention enables the production of an electrical storage device electrode that can be reduced in internal resistance and is excellent in adhesiveness. The binder composition for an electrical storage device according to the present invention exhibits the above-mentioned effects particularly when the electrical storage device electrode includes graphite as an active material because the polymer (A) has good compatibility with graphite, in particular.

DESCRIPTION OF EMBODIMENTS

Preferred embodiments of the present invention are described in detail below. It should be appreciated that the present invention is not limited to the following embodiments, and includes various modification examples performed within the range not changing the gist of the present invention.

Herein, the term "(meth)acrylic acid ···" represents "acrylic acid ···" or "methacrylic acid ···." Similarly, the term "··· (meth)acrylate" represents "··· acrylate" or "··· methacrylate." Similarly, the term "(meth)acrylamide" represents "acrylamide" or "methacrylamide".

Herein, a numerical range described as "from X to Y" is to be construed to include a numerical value X as a lower limit value and a numerical value Y as an upper limit value.

1. Binder Composition for Electrical Storage Device

A binder composition for an electrical storage device according to one embodiment of the present invention includes a polymer (A) and a liquid medium (B). The value of the spin-spin relaxation time (T2) of the polymer (A) measured by pulsed NMR is 0.8 msec or less at 100°C. With respect to 100 mass% in total of repeating units contained in the polymer (A), the polymer (A) contains 0 mass% or more and 4 mass% or less of a repeating unit (a1) derived from an unsaturated carboxylic acid.

The binder composition for an electrical storage device according to this embodiment may be used as a material for producing an electrical storage device electrode (active material layer) improved in adhesiveness, and may also be used as a material for producing a protective film for suppressing a short circuit due to dendrites generated along with charge and discharge. The respective components included in the binder composition for an electrical storage device according to this embodiment are described in detail below.

1.1. Polymer (A)

The binder composition for an electrical storage device according to this embodiment includes the polymer (A). The polymer (A) included in the binder composition for an electrical storage device according to this embodiment may be in the form of latex dispersed in the liquid medium (B), or may be in a state of being dissolved in the liquid medium (B), but is preferably in the form of latex dispersed in the liquid medium (B). A case in which the polymer (A) is in the form of latex dispersed in the liquid medium (B) is preferred because the stability of a slurry for an electrical storage device electrode (hereinafter also referred to simply as "slurry") produced by mixing the binder composition with an active material becomes satisfactory and the applicability of the slurry to a current collector becomes satisfactory. Further, when the polymer (A) is in the form of latex dispersed in the liquid medium (B), the particle shape of the polymer (A) is easily maintained during the production of an electrical storage device electrode, and the permeability of an electrolytic solution inside the electrode increases to improve lithium ion conductivity. Thus, the internal resistance of the electrode can be reduced.

The constituent repeating units of the polymer (A), the physical properties of the polymer (A), and a production method therefor are described below in the stated order.

1.1.1. Constituent Repeating Units of Polymer (A)

1.1.1.1. Repeating Unit (a1) derived from Unsaturated Carboxylic Acid

The polymer (A) contains the repeating unit (a1) derived from an unsaturated carboxylic acid (hereinafter also referred to as "repeating unit (a1)"). The content ratio of the repeating unit (a1) is 0 mass% or more and 4 mass% or less with respect to 100 mass% in total of repeating units contained in the polymer (A). The content ratio of the repeating unit (a1) is more preferably 0.5 mass% or more, particularly preferably 1 mass% or more. The content ratio of the repeating unit (a1) is more preferably 3.5 mass% or less, particularly preferably 3 mass% or less. When the polymer (A) contains the repeating unit (a1) within the above-mentioned ranges, the dispersibility of an active material or a filler becomes satisfactory. In addition, the polymer (A) has appropriate hardness, and hence adhesiveness with the active material or the current collector can be improved.

Such unsaturated carboxylic acid is not particularly limited, but examples thereof include monocarboxylic acids and dicarboxylic acids (including anhydrides), such as acrylic acid, methacrylic acid, crotonic acid, maleic acid, fumaric acid, and itaconic acid, and one or more kinds selected therefrom may be used. Of those, one or more kinds selected from acrylic acid, methacrylic acid, and itaconic acid are preferably used.

1.1.1.2. Other Repeating Units

The polymer (A) may contain, in addition to the repeating unit (a1), a repeating unit derived from another monomer copolymerizable therewith. Examples of such repeating unit include: a repeating unit (a2) derived from a conjugated diene compound (hereinafter also referred to as "repeating unit (a2)"); a repeating unit (a3) derived from an aromatic vinyl compound (hereinafter also referred to as "repeating unit (a3)"); a repeating unit (a4) derived from an ethylenically unsaturated monomer having two or more ethylenically unsaturated bonds (hereinafter also referred to as "repeating unit (a4)"); a repeating unit (a5) derived from an $\alpha,\beta$-unsaturated nitrile compound (hereinafter also referred to as "repeating unit (a5)"); a repeating unit (a6) derived from an unsaturated carboxylic acid ester (hereinafter also referred to as "repeating unit (a6)"); a repeating unit (a7) derived from (meth)acrylamide (hereinafter also referred to as "repeating unit (a7)"); a repeating unit (a8) derived from a compound having a sulfonic acid group (hereinafter also referred to as "repeating unit (a8)"); and a repeating unit derived from a cationic monomer.

<Repeating Unit (a2) derived from Conjugated Diene Compound>

The polymer (A) may contain the repeating unit (a2) derived from a conjugated diene compound. The content ratio of the repeating unit (a2) derived from a conjugated diene compound is preferably 10 mass% or more and 60 mass% or less with respect to 100 mass% in total of the repeating units contained in the polymer (A). The content ratio of the repeating unit (a2) is more preferably 15 mass% or more, particularly preferably 20 mass% or more. The content ratio of the repeating unit (a2) is more preferably 55 mass% or less, particularly preferably 50 mass% or less. When the polymer (A) contains the repeating unit (a2) within the above-mentioned ranges, the dispersibility of an active material or a filler becomes satisfactory to enable the production of a uniform active material layer or protective film. Thus, a structural defect of an electrode plate is eliminated, with the result that a satisfactory repeated charge-discharge characteristic is shown in some cases. In addition, stretching and shrinking properties can be imparted to the polymer (A) covering the surface of the active material, and adhesiveness can be improved by virtue of stretching and shrinking of the polymer (A), with the result that a satisfactory charge-discharge durability characteristic is shown in some cases.

The repeating unit (a2) derived from a conjugated diene compound is preferably free from being hydrogenated by an oil layer hydrogenation method or an aqueous layer hydrogenation method. When the polymer (A) contains the repeating unit (a2) derived from a conjugated diene compound that is free from being hydrogenated, stretching and shrinking properties can be imparted to the polymer (A), and the adhesiveness can be further improved by virtue of stretching and shrinking of the polymer (A) in some cases.

The conjugated diene compound is not particularly limited, but examples thereof include 1,3-butadiene, 2-methyl-1,3-butadiene, 2,3-dimethyl-1,3-butadiene, and 2-chloro-1,3-butadiene, and one or more kinds selected therefrom may be used. Of those, 1,3-butadiene is particularly preferred.

<Repeating Unit (a3) derived from Aromatic Vinyl Compound>

The polymer (A) may contain the repeating unit (a3) derived from an aromatic vinyl compound. The content ratio of the repeating unit (a3) is preferably 30 mass% or more and 85 mass% or less with respect to 100 mass% in total of the repeating units contained in the polymer (A). The content ratio of the repeating unit (a3) is more preferably 35 mass% or more, particularly preferably 40 mass% or more. The content ratio of the repeating unit (a3) is more preferably 80 mass% or less, particularly preferably 75 mass% or less. When the polymer (A) contains the repeating unit (a3) within the above-mentioned ranges, fusion between particles of the polymer (A) dispersed in an electrode can be reduced, and the permeability of an electrolytic solution can be improved. Further, a satisfactory binding ability to graphite or the like to be used as an active material is shown in some cases, and an electrical storage device electrode excellent in adhesiveness is obtained in some cases.

The aromatic vinyl compound is not particularly limited, but examples thereof include styrene, $\alpha$-methylstyrene, p-methylstyrene, vinyltoluene, and chlorostyrene, and one or more kinds selected therefrom may be used.

<Repeating Unit (a4) derived from Ethylenically Unsaturated Monomer having Two or more Ethylenically Unsaturated Bonds>

The polymer (A) may contain the repeating unit (a4) derived from an ethylenically unsaturated monomer having two or more ethylenically unsaturated bonds. The content ratio of the repeating unit (a4) derived from an ethylenically unsaturated monomer having two or more ethylenically unsaturated bonds is preferably from 0 mass% to 10 mass% with respect to 100 mass% in total of the repeating units contained in the polymer (A). The content ratio of the repeating unit (a4) is more preferably 0.05 mass% or more, particularly preferably 0.1 mass% or more. The content ratio of the repeating unit (a4) is more preferably 8 mass% or less, more preferably 6 mass%.

The ethylenically unsaturated monomer having two or more ethylenically unsaturated bonds is not particularly limited, but examples thereof include divinylbenzene, ethylene glycol di(meth)acrylate, diethylene glycol di(meth)acrylate, propylene glycol di(meth)acrylate, trimethylolpropane di(meth)acrylate, neopentyl glycol di(meth)acrylate, trimethylolpropane tri(meth)acrylate, pentaerythritol tetra(meth)acrylate, dipentaerythritol hexa(meth)acrylate, allyl (meth)acrylate, and glycerin di(meth)acrylate, and one or more kinds selected therefrom may be used.

<Repeating Unit (a5) derived from $\alpha,\beta$-Unsaturated Nitrile Compound>

The polymer (A) may contain the repeating unit (a5) derived from an $\alpha,\beta$-unsaturated nitrile compound. The content ratio of the repeating unit (a5) is preferably 0 mass% or more and 30 mass% or less with respect to 100 mass% in total of the repeating units contained in the polymer (A). The content ratio of the repeating unit (a5) is more preferably 0.5 mass% or more, particularly preferably 1 mass% or more. The content ratio of the repeating unit (a5) is more preferably 28 mass% or less, particularly preferably 26 mass% or less. When the polymer (A) contains the repeating unit (a5) within the above-mentioned ranges, the solubility of the polymer (A) in an electrolytic solution can be reduced, and hence a decrease in adhesiveness due to the electrolytic solution can be reduced in some cases. In addition, an increase in internal resistance caused by a dissolved polymer component serving as an electrical resistance component in an electrical storage device can be reduced in some cases.

The $\alpha,\beta$-unsaturated nitrile compound is not particularly limited, but examples thereof include acrylonitrile, methacrylonitrile, $\alpha$-chloroacrylonitrile, $\alpha$-ethylacrylonitrile, vinylidene cyanide, isopropylidenemalononitrile, fumaronitrile, and tetracyanoethylene, and one or more kinds selected therefrom may be used. Of those, one or more kinds selected from the group consisting of acrylonitrile and methacrylonitrile are preferred, and acrylonitrile is particularly preferred.

<Repeating Unit (a6) derived from Unsaturated Carboxylic Acid Ester>

The polymer (A) may contain the repeating unit (a6) derived from an unsaturated carboxylic acid ester. The content ratio of the repeating unit (a6) is preferably 0 mass% or more and 25 mass% or less with respect to 100 mass% in total of the repeating units contained in the polymer (A). The content ratio of the repeating unit (a6) is more preferably 0.05 mass% or more, particularly preferably 0.1 mass% or more. The content ratio of the repeating unit (a6) is more preferably 23 mass% or less, particularly preferably 20 mass% or less. When the polymer (A) contains the repeating unit (a6) within the above-mentioned ranges, affinity between the polymer (A) and an electrolytic solution becomes satisfactory, and hence an increase in internal resistance caused by the binder serving as an electrical resistance component in an electrical storage device can be reduced in some cases. In addition, a decrease in adhesiveness due to excessive absorption of the electrolytic solution can be prevented in some cases.

Of the unsaturated carboxylic acid esters, a (meth)acrylic acid ester may be preferably used. Specific examples of the (meth)acrylic acid ester include methyl (meth)acrylate, ethyl (meth)acrylate, n-propyl (meth)acrylate, isopropyl (meth)acrylate, n-butyl (meth)acrylate, isobutyl (meth)acrylate, n-amyl (meth)acrylate, isoamyl (meth)acrylate, hexyl (meth)acrylate, cyclohexyl (meth)acrylate, 2-ethylhexyl (meth)acrylate, n-octyl (meth)acrylate, nonyl (meth)acrylate, decyl (meth)acrylate, 2-hydroxymethyl (meth)acrylate, 2-hydroxyethyl (meth)acrylate, 2-hydroxypropyl (meth)acrylate, 3-hydroxypropyl (meth)acrylate, 4-hydroxybutyl (meth)acrylate, 5-hydroxypentyl (meth)acrylate, 6-hydroxyhexyl (meth)acrylate, and glycerin mono(meth)acrylate, and one or more kinds selected therefrom may be used. Of those, one or more kinds selected from methyl (meth)acrylate, ethyl (meth)acrylate, n-butyl (meth)acrylate, and 2-ethylhexyl (meth)acrylate are preferred, and methyl (meth)acrylate is particularly preferred.

<Repeating Unit (a7) derived from (Meth)acrylamide>

The polymer (A) may contain the repeating unit (a7) derived from (meth)acrylamide. The content ratio of the repeating unit (a7) is preferably 0 mass% or more and 5 mass% or less with respect to 100 mass% in total of the repeating units contained in the polymer (A). The content ratio of the repeating unit (a7) is more preferably 0.5 mass% or more, particularly preferably 1 mass% or more. The content ratio of the repeating unit (a7) is more preferably 4 mass% or less, particularly preferably 3 mass% or less. When the polymer (A) contains the repeating unit (a7) within the above-mentioned ranges, the dispersibility of an active material or a filler in the slurry becomes satisfactory in some cases. In addition, an active material layer to be obtained has moderate flexibility, and adhesiveness between a current collector and the active material layer is improved in some cases. Further, a binding ability between the active materials containing a carbon material like graphite or a silicon material can be enhanced, and hence an active material layer that is more satisfactory in adhesiveness is obtained in some cases.

The (meth)acrylamide is not particularly limited, but examples thereof include acrylamide, methacrylamide, N-isopropylacrylamide, N,N-dimethylacrylamide, N,N-dimethylmethacrylamide, N,N-diethylacrylamide, N,N-diethylmethacrylamide, N,N-dimethylaminopropylacrylamide, N,N-dimethylaminopropylmethacrylamide, N-methylolacrylamide, N-methylolmethacrylamide, diacetone acrylamide, maleic acid amide, and acrylamide tert-butylsulfonic acid, and one or more kinds selected therefrom may be used.

<Repeating Unit (a8) derived from Compound having Sulfonic Acid Group>

The polymer (A) may contain the repeating unit (a8) derived from a compound having a sulfonic acid group. The content ratio of the repeating unit (a8) is preferably 0 mass% or more and 5 mass% or less with respect to 100 mass% in total of the repeating units contained in the polymer (A). The content ratio of the repeating unit (a8) is more preferably 0.5 mass% or more, particularly preferably 1 mass% or more. The content ratio of the repeating unit (a8) is more preferably 4 mass% or less, particularly preferably 3 mass% or less.

The compound having a sulfonic acid group is not particularly limited, but examples thereof include compounds, such as vinylsulfonic acid, styrenesulfonic acid, allylsulfonic acid, sulfoethyl (meth)acrylate, sulfopropyl (meth)acrylate, sulfobutyl (meth)acrylate, 2-acrylamido-2-methylpropanesulfonic acid, 2-hydroxy-3-acrylamidopropanesulfonic acid, and 3-allyloxy-2-hydroxypropanesulfonic acid, and salts thereof, and one or more kinds selected therefrom may be used.

<Repeating Unit derived from Cationic Monomer>

The polymer (A) may contain the repeating unit derived from a cationic monomer. The cationic monomer is not particularly limited, but is preferably at least one kind of monomer selected from the group consisting of: a secondary amine (salt); a tertiary amine (salt); and a quaternary ammonium salt. Specific examples of those cationic monomers include, but are not particularly limited to, 2-(dimethylamino)ethyl (meth)acrylate, dimethylaminoethyl (meth)acrylate methyl chloride quaternary salt, 2-(diethylamino)ethyl (meth)acrylate, 3-(dimethylamino)propyl (meth)acrylate, 3-(diethylamino)propyl (meth)acrylate, 4-(dimethylamino)phenyl (meth)acrylate, 2-[(3,5-dimethylpyrazolyl)carbonylamino]ethyl (meth)acrylate, 2-(0-[1"-methylpropylidencamino]carboxyamino)ethyl (meth)acrylate, 2-(1-aziridinyl)ethyl (meth)acrylate, methacryloylcholine chloride, tris(2-acryloyloxyethyl) isocyanurate, 2-vinylpyridine, quinaldine red, 1,2-di(2-pyridyl)ethylene, 4'-hydrazino-2-stilbazole dihydrochloride hydrate, 4-(4-dimethylaminostyryl)quinoline, 1-vinylimidazole, diallylamine, diallylamine hydrochloride, triallylamine, diallyldimethylammonium chloride, dichlormid, N-allylbenzylamine, N-allylaniline, 2,4-diamino-6-diallylamino-1,3,5-triazine, N-trans-cinnamyl-N-methyl-(1-naphthylmethyl)amine hydrochloride, and trans-N-(6,6-dimethyl-2-hepten-4-yl)-N-methyl-1-naphthylmethylamine hydrochloride, and one or more kinds selected therefrom may be used.

1.1.2. Physical Properties of Polymer (A)

1.1.2.1. Pulsed NMR

When the pulsed NMR measurement of the polymer (A) is performed, the value of the spin-spin relaxation time (T2) obtained as the time constant of proton spin-spin relaxation is 0.8 msec or less at 100°C.

In this embodiment, the spin-spin relaxation time T2 of the polymer (A) is measured by a Carr-Purcell-Meiboom-Gill (CPMG) method using a pulsed nuclear magnetic resonance (NMR) device. The pulsed NMR device is a device for evaluating the mobility of a polymer molecule from the mobility (relaxation time) of hydrogen atoms in a polymer chain, and in this embodiment, the CPMG method is used as its sequence.

A known method may be used as the CPMG method itself using the pulsed NMR device. For example, reference may be made to the method described in JP 2020-085776 A. Specifically, a T2 relaxation curve (free induction decay curve) obtained by measuring the spin-spin relaxation time T2 (transverse relaxation time) is separated into two components by curve fitting to the following equation (1) or the following equation (2).

$$F(t) = \sum_{i=1}^{n} A_i exp\left(-\frac{t}{T2_i}\right) \qquad \cdots\cdots (1)$$

In the equation (1), "n" represents the number of components to be separated, and is set to n=2 in the measurement of the present invention. "t" represents an observation time. $T2_i$ represents the relaxation time of each component. $A_i$ represents the intensity of each component "i" at t=0, and is proportional to the amount of the component "i". Herein, the relaxation time lengthens in the order of Component 1<Component 2, and therefore, the component having higher molecular mobility is Component 2.

$$F(t) = A_1 exp\left(-\frac{t}{T2_1}\right) + A_2 exp\left(-\frac{t}{T2_2}\right) \qquad \cdots\cdots (2)$$

In the equation (2), "t" represents the observation time. $T2_1$ represents the relaxation time of Component 1, and $T2_2$ represents the relaxation time of Component 2. $A_1$ represents the intensity of Component 1 at t=0, and $A_2$ represents the intensity of Component 2 at t=0.

The relaxation time $T2_i$ of each component when the fitting is performed by the equation (1) or the equation (2) may be set to any value and is not particularly limited. In the present invention, the relaxation time $T2_1$ of Component 1 may be set to 3 ms or less (e.g., from 0.1 ms to 2.5 ms), and the relaxation time $T2_2$ of Component 2 may be set to 2 ms or more (e.g., from 2.5 ms to 70 ms) (provided that $T2_1 < T2_2$). In the present invention, the relaxation time $T2_1$ of Component 1 out of the two separated components is defined as the spin-spin relaxation time (T2).

A measurement sample for the pulsed NMR is a film of the polymer (A). The film of the polymer (A) is obtained by drying the polymer (A) at 40°C for 24 hours to produce a uniform film having a thickness of $1.0 \pm 0.3$ mm, and drying the film in a vacuum dryer at 160°C for 30 minutes, followed by cutting into a strip shape measuring 10 mm by 5 mm.

The polymer (A) to be used in this embodiment is characterized by a low T2 at 100°C. This indicates that the mobility of a polymer chain is low at the drying temperature of a slurry or an electrode. It is conceived that the low mobility can reduce excessive coating of the active material with the polymer (A) during the drying of an electrode and ensure the reduction of the resistance of an electrical storage device. Meanwhile, the T2 value has a low correlation with large deformations that involve the destruction of the polymer chain. Thus, deformation occurs under strong stress generated by electrode pressing, and a binding ability between the active materials can be expressed.

The T2 of the polymer (A) at 100°C falls within the range of 0.8 msec or less, but preferably falls within the range of 0.75 msec or less and more preferably falls within the range of 0.7 msec or less.

A method of adjusting the T2 of the polymer (A) is, for example, a method including adjusting the composition of monomers during polymerization, a method including adjusting a radical polymerization initiator, a method including adjusting a chain transfer agent, or a method including adjusting a polymerization temperature. The T2 is not simply determined by the composition of monomers alone, but may be complexly influenced by many factors, such as the distribution of monomer chains, stereoregularity, a molecular weight, a polymer chain end structure, and a degree of crosslinking. Particularly in the case of a particulate polymer, the change of conditions, such as the composition of monomers, the amount of an initiator, the amount of a chain transfer agent, and a polymerization temperature, during the polymerization process significantly changes the T2 value, and hence copolymers having different T2 values while having the same composition of monomers are obtained.

1.1.2.2. Z-average Particle Diameter

When the polymer (A) is particles, the Z-average particle diameter of the particles is preferably 50 nm or more and 500 nm or less, more preferably 60 nm or more and 450 nm or less, particularly preferably 70 nm or more and 400 nm or less. When the Z-average particle diameter of the particles of the polymer (A) falls within the above-mentioned ranges, the balance between an adhesive property to the surface of the active material and a coating property is satisfactory, and both the binding force required for maintaining the structure of an electrode and the reduction of the resistance of the electrode can be achieved at a high level.

A value measured by a dynamic light scattering method (DLS method) may be used as the Z-average particle diameter of the particles of the polymer (A). A particle diameter measuring device using the DLS is, for example, "FPAR-1000" manufactured by Otsuka Electronics Co., Ltd. A cumulant analysis method is used as an analysis method.

The DLS measurement is performed by using a dispersion of the polymer (A). The DLS method may overestimate measurement values owing to the influence of a small amount of coarse particles or foreign matter, and hence a measurement solution is filtered with a filter having a pore diameter of from 1 $\mu$m to 3 $\mu$m.

When the polymer (A) is particles, the polymer (A) preferably satisfies the relationship of the following formula (3).

$$41.1 \times T2 + 2,237.4 \div PS + 48.3 < 100 \quad \cdots \cdots (3)$$

T2: value of spin-spin relaxation time (T2) of polymer (A) at 100°C measured by pulsed NMR
PS: Z-average particle diameter (nm) of polymer particles

The formula (3) is an empirical formula obtained by statistically analyzing a large amount of experimental data. When the above-mentioned range is satisfied, the balance between the adhesive property of the binder to the active material and the active material coating property is improved, and both of a high cycle characteristic and the reduction of the resistance of a device can be achieved.

1.1.3. Production Method for Polymer (A)

A production method for the polymer (A) is not particularly limited, but for example, the polymer (A) may be produced by an emulsion polymerization method to be performed in the presence of a known emulsifier (surfactant), chain transfer agent, polymerization initiator, and the like. Compounds described in JP 5999399 B2 and the like may be used as the emulsifier (surfactant), the chain transfer agent, and the polymerization initiator.

The emulsion polymerization method for synthesizing the polymer (A) may be performed by one-stage polymerization, or may be performed by multistage polymerization involving two or more stages of polymerization.

When the synthesis of the polymer (A) is performed by one-stage polymerization, a mixture of the above-mentioned monomers may be subjected to emulsion polymerization in the presence of an appropriate emulsifier, chain transfer agent, polymerization initiator, and the like at preferably from 35°C to 85°C for preferably from 4 hours to 36 hours.

When the synthesis of the polymer (A) is performed by two-stage polymerization, the respective stages of the polymerization are preferably set as described below.

The usage ratio of monomers to be used in the first stage of the polymerization is set to fall within preferably the range of from 20 mass% to 99 mass%, more preferably the range of from 25 mass% to 99 mass% with respect to the total mass of monomers (sum of the mass of the monomers to be used in the first stage of the polymerization and the mass of monomers to be used in the second stage of the polymerization). A case in which the first stage of the polymerization is performed at such usage ratio of the monomers is preferred because particles of the polymer (A), which are excellent in dispersion stability, and hence hardly cause aggregation, can be obtained, and an increase in viscosity of the binder composition for an electrical storage device over time is reduced.

The kinds and usage ratio of the monomers to be used in the second stage of the polymerization may be the same as or different from the kinds and usage ratio of the monomers to be used in the first stage of the polymerization.

Polymerization conditions in the respective stages are preferably set as described below from the viewpoint of the dispersibility of the particles of the polymer (A) to be obtained.

·First stage of polymerization: a temperature of preferably from 35°C to 80°C; a polymerization time of preferably from 2 hours to 36 hours; and a polymerization conversion rate of preferably 50 mass% or more, more preferably 60 mass% or more.

·Second stage of polymerization: a temperature of preferably from 40°C to 85°C; and a polymerization time of preferably from 2 hours to 18 hours.

When a total solid content concentration in the emulsion polymerization is set to 50 mass% or less, the polymerization reaction can be allowed to proceed under a state in which the dispersion stability of the particles of the polymer (A) to be obtained is satisfactory. The total solid content concentration is preferably 48 mass% or less, more preferably 45 mass% or less.

Irrespective of whether the synthesis of the polymer (A) is performed as one-stage polymerization or by a multistage polymerization method, after the completion of the emulsion polymerization, a neutralizer is preferably added to the polymerization mixture to adjust its pH to from about 4.5 to about 10.5, preferably from 5 to 10, more preferably from 5.5 to 9.5. The neutralizer to be used in this case is not particularly limited, but examples thereof include metal hydroxides, such as lithium hydroxide, sodium hydroxide, and potassium hydroxide, ammonia, ethylamine, diethylamine, triethylamine, 2-mercaptoethylamine, glycine, lysine, glutamic acid, 2-aminoethanethiol, and cysteine. When the pH is set to fall within the above-mentioned ranges, the stability of the polymer (A) becomes satisfactory. When the polymerization mixture is subjected to neutralization treatment before being concentrated, its solid content concentration can be increased while satisfactory stability of the polymer (A) is maintained.

1.1.4. Content Ratio of Polymer (A)

The content ratio of the polymer (A) in the binder composition for an electrical storage device according to this embodiment is preferably from 10 mass% to 100 mass%, more preferably from 20 mass% to 95 mass%, particularly preferably from 25 mass% to 90 mass% in 100 mass% of a polymer component. Herein, the polymer component includes the polymer (A), and for example, a polymer other than the polymer (A) and a thickener to be described later.

1.2. Liquid Medium (B)

The binder composition for an electrical storage device according to this embodiment includes the liquid medium (B). The liquid medium (B) is preferably an aqueous medium containing water, and is more preferably water. The aqueous medium may contain a non-aqueous medium in addition to water. Examples of the non-aqueous medium may include an amide compound, a hydrocarbon, an alcohol, a ketone, an ester, an amine compound, a lactone, a sulfoxide, and a sulfone compound, and one or more kinds selected therefrom may be used. When the binder composition for an electrical storage device according to this embodiment uses the aqueous medium as the liquid medium (B), the binder composition adversely affects an environment to a less degree and is highly safe for a worker who handles the binder composition.

The content ratio of the non-aqueous medium in the aqueous medium is preferably 10 mass% or less, more preferably 5 mass% or less in 100 mass% of the aqueous medium. It is particularly preferred that the aqueous medium be substantially free of the non-aqueous medium. Herein, the phrase "be substantially free" merely means that the non-aqueous medium is not intentionally added as the liquid medium, and the aqueous medium may contain the non-aqueous medium that is inevitably mixed during the preparation of the binder composition for an electrical storage device.

### 1.3. Other Additives

The binder composition for an electrical storage device according to this embodiment may include an additive other than the above-mentioned components as required. Examples of such additive include a polymer other than the polymer (A), a preservative, and a thickener.

### 1.3.1. Polymer other than Polymer (A)

The binder composition for an electrical storage device according to this embodiment may contain a polymer other than the polymer (A). Such polymer is not particularly limited, but examples thereof include: an acrylic polymer containing an unsaturated carboxylic acid ester or a derivative thereof as a constituent unit; and a fluoropolymer such as polyvinylidene fluoride (PVDF). Those polymers may be used alone or in combination thereof. The incorporation of any such polymer further improves flexibility and adhesiveness in some cases.

### 1.3.2. Preservative

The binder composition for an electrical storage device according to this embodiment may include a preservative. The incorporation of the preservative can reduce the generation of foreign matter due to the growth of bacteria, mold, or the like during the storage of the binder composition for an electrical storage device in some cases. Specific examples of the preservative include compounds described in JP 5477610 B1.

### 1.3.3. Thickener

The binder composition for an electrical storage device according to this embodiment may include a thickener. The incorporation of the thickener can further improve the applicability of a slurry, the charge-discharge characteristic of an electrical storage device to be obtained, and the like in some cases.

Specific examples of the thickener may include: cellulose compounds, such as carboxymethyl cellulose, methyl cellulose, and hydroxypropyl cellulose; poly(meth)acrylic acid; ammonium salts or alkali metal salts of the cellulose compound or the poly(meth)acrylic acid; polyvinyl alcohol-based (co)polymers, such as polyvinyl alcohol, modified polyvinyl alcohol, and an ethylene-vinyl alcohol copolymer; and water-soluble polymers such as a saponified product of a copolymer of an unsaturated carboxylic acid, such as (meth)acrylic acid, maleic acid, or fumaric acid, and a vinyl ester. Of those, an alkali metal salt of carboxymethyl cellulose, an alkali metal salt of poly(meth)acrylic acid, and the like are preferred.

As commercially available products of those thickeners, there may be given, for example, alkali metal salts of carboxymethyl cellulose, such as CMC 1120, CMC 1150, CMC 2200, CMC 2280, and CMC 2450 (all of which are manufactured by Daicel Corporation).

When the binder composition for an electrical storage device according to this embodiment includes the thickener, the content ratio of the thickener is preferably 5 mass% or less, more preferably from 0.1 mass% to 3 mass% with respect to 100 mass% of the total solid content of the binder composition for an electrical storage device.

### 1.4. pH of Binder Composition for Electrical Storage Device

The pH of the binder composition for an electrical storage device according to this embodiment is preferably from 5 to 10, more preferably from 6 to 9.5, particularly preferably from 6.5 to 9. When the pH falls within the above-mentioned ranges, the occurrence of a problem, such as lack of a leveling property or liquid dripping, can be reduced. Thus, an electrical storage device electrode achieving both of a satisfactory electrical characteristic and satisfactory adhesiveness is easily produced.

Herein, the term "pH" refers to a physical property measured as described below: a value measured at 25°C in conformity to JIS Z8802:2011 with a pH meter using a glass electrode calibrated with a neutral phosphate standard solution and a borate standard solution serving as pH standard solutions. Examples of such pH meter include "HM-7J" manufactured by DKK-TOA Corporation and "D-51" manufactured by Horiba, Ltd.

It is not denied that the pH of the binder composition for an electrical storage device is affected by the composition of the constituent monomers of the polymer (A), but it should be noted that the pH is not determined by the composition of monomers alone. That is, it is known that the pH of a binder composition for an electrical storage device generally varies depending on polymerization conditions and the like even for the same composition of monomers, and Examples herein are merely some examples thereof.

For example, even for the same composition of monomers, the case of loading all the unsaturated carboxylic acid into a polymerization reaction liquid at the beginning, and then sequentially adding the other monomers, and the case of loading the monomers other than the unsaturated carboxylic acid into a polymerization reaction liquid, and finally adding the unsaturated carboxylic acid provide different amounts of carboxy groups derived from the unsaturated carboxylic acid exposed on the surface of the polymer to be obtained. Thus, it is conceivable that the pH of the binder composition for an electrical storage device is significantly changed merely by changing the order in which the monomers are added in the polymerization method.

2. Slurry for Electrical Storage Device

A slurry for an electrical storage device according to one embodiment of the present invention includes the above-mentioned binder composition for an electrical storage device. The above-mentioned binder composition for an electrical storage device may be used as a material for producing a protective film for suppressing a short circuit due to dendrites generated along with charge and discharge, and may also be used as a material for producing an electrical storage device electrode (active material layer) improved in binding ability between the active materials and adhesive ability between the active material and a current collector, and in powder fall-off resistance. For this reason, the slurry for an electrical storage device for producing a protective film (hereinafter also referred to as "slurry for a protective film"), and the slurry for an electrical storage device for producing the active material layer of an electrical storage device electrode (hereinafter also referred to as "slurry for an electrical storage device electrode") are separately described.

2.1. Slurry for Protective Film

The term "slurry for a protective film" refers to a dispersion to be used for producing a protective film on the surface of an electrode or a separator, or the surfaces of both thereof by being applied to the surface of the electrode or the separator, or the surfaces of both thereof, and then dried. The slurry for a protective film according to this embodiment may consist only of the above-mentioned binder composition for an electrical storage device, or may further include an inorganic filler. An example of the inorganic filler is an inorganic filler described in JP 2020-184461 A.

2.2. Slurry for Electrical Storage Device Electrode

The term "slurry for an electrical storage device electrode" refers to a dispersion to be used for producing an active material layer on the surface of a current collector by being applied to the surface of the current collector and then dried. The slurry for an electrical storage device electrode according to this embodiment includes the above-mentioned binder composition for an electrical storage device, and an active material.

In general, a slurry for an electrical storage device electrode often includes a binder component such as a SBR-based copolymer and a thickener such as carboxymethyl cellulose in order to improve a binding ability. Meanwhile, the slurry for an electrical storage device electrode according to this embodiment can improve adhesiveness even when the slurry includes only the above-mentioned polymer (A) as a polymer component. Of course, the slurry for an electrical storage device electrode according to this embodiment may include a polymer other than the polymer (A) and a thickener in order to further improve the adhesiveness. The components included in the slurry for an electrical storage device electrode according to this embodiment are described below.

2.2.1. Polymer (A)

The composition, physical properties, production method, and the like of the polymer (A) are as described above, and hence the description thereof is omitted.

The content ratio of the polymer component in the slurry for an electrical storage device electrode according to this embodiment is preferably from 0.5 part by mass to 10 parts by mass, more preferably from 1 part by mass to 8 parts by mass, still more preferably from 1 part by mass to 7 parts by mass, particularly preferably from 1.5 parts by mass to 6 parts by mass with respect to 100 parts by mass of the active material. When the content ratio of the polymer component falls within the above-mentioned ranges, the dispersibility of the active material in the slurry becomes satisfactory, and the applicability of the slurry becomes excellent. Herein, the polymer component includes the polymer (A), and for example, the polymer other than the polymer (A) and the thickener to be added as required.

2.2.2. Active Material

Examples of the active material to be used for the slurry for an electrical storage device electrode according to this embodiment include a carbon material, a silicon material, an oxide containing a lithium atom, a lead compound, a tin compound, an arsenic compound, an antimony compound, an aluminum compound, a conductive polymer such as polyacene, a composite metal oxide represented by $A_XB_YO_Z$ (where A represents an alkali metal or a transition metal, B represents at least one kind selected from transition metals, such as cobalt, nickel, aluminum, tin, and manganese, O represents an oxygen atom, and X, Y, and Z represent numbers in the ranges of 1.10>X>0.05, 4.00>Y>0.85, and 5.00>Z>1.5, respectively), and other metal oxides. Specific examples thereof include compounds described in JP 5999399 B2.

The slurry for an electrical storage device electrode according to this embodiment may be used in the production of any one of electrical storage device electrodes including a positive electrode and a negative electrode, and is preferably used for both the positive electrode and the negative electrode.

In the case of using lithium iron phosphate as a positive electrode active material, there has been a problem in that the charge-discharge characteristic is not sufficient and the adhesiveness is poor. It is known that lithium iron phosphate has fine primary particle diameters, and is a secondary aggregate thereof. One conceivable cause of the problem is as follows: the aggregation collapses in the active material layer during repeated charge and discharge to cause separation between the active materials, with the result that peeling from a current collector, or disruption of a conductive network in the active material layer is liable to occur.

To address such problem, an electrical storage device electrode produced by using the slurry for an electrical storage device electrode according to this embodiment can show a satisfactory electrical characteristic without the occurrence of such problem as described above even in the case of using lithium iron phosphate as the positive electrode active material. A conceivable reason therefor is that the polymer (A) can firmly bind lithium iron phosphate, and at the same time, can maintain the state of firmly binding lithium iron phosphate even during charge and discharge.

Meanwhile, when the negative electrode is produced, among the active materials given as examples above, a carbon material is preferred, and graphite (natural graphite or artificial graphite) is more preferred. In particular, the polymer (A) containing 0 mass% or more and 4 mass% or less of the repeating unit (a1) derived from an unsaturated carboxylic acid has good compatibility with graphite serving as the active material, and hence the binding ability between the active materials can be further improved. In addition, when the value of the spin-spin relaxation time (T2) of the polymer (A) measured by pulsed NMR is 0.8 msec or less at 100°C, excessive coating of the active material with the polymer (A) can be reduced during the drying of an electrode, and the reduction of the resistance of the electrode can be ensured.

The active material preferably has a particulate shape. The average particle diameter of the active material is preferably from 0.1 $\mu$m to 100 $\mu$m, more preferably from 1 $\mu$m to 20 $\mu$m. Herein, the average particle diameter of the active material refers to a volume average particle diameter calculated from a particle size distribution, the particle size distribution being measured with a particle size distribution-measuring apparatus employing a laser diffraction method as its measurement principle. Examples of such laser diffraction particle size distribution-measuring apparatus include the HORIBA LA-300 series and the HORIBA LA-920 series (which are manufactured by Horiba, Ltd.).

2.2.3. Other Components

In addition to the above-mentioned components, other components may be added to the slurry for an electrical storage device electrode according to this embodiment as required. Examples of such components include a polymer other than the polymer (A), a thickener, a liquid medium, a conductive aid, a pH adjusting agent, a corrosion inhibitor, and a cellulose fiber. The polymer other than the polymer (A) and the thickener may be appropriately selected from the compounds given as examples in the "1.3. Other Additives" section, and may be used for similar purposes and at similar content ratios.

<Liquid Medium>

A liquid medium may be further added to the slurry for an electrical storage device electrode according to this embodiment in addition to the liquid medium included in the binder composition for an electrical storage device. The kind of the liquid medium to be added may be the same as or different from that of the liquid medium (B) included in the binder composition for an electrical storage device. However, a liquid medium selected from the liquid media given as examples in the "1.2. Liquid Medium (B)" section is preferably used.

The content ratio of the liquid medium (including the liquid medium included in the binder composition for an electrical storage device) in the slurry for an electrical storage device electrode according to this embodiment is set to such a ratio that the solid content concentration in the slurry (which refers to the ratio of the total mass of the components other than the liquid medium in the slurry to the total mass of the slurry; the same applies hereinafter) becomes preferably from 30 mass% to 70 mass%, more preferably from 40 mass% to 60 mass%.

<Conductive Aid>

A conductive aid may be further added to the slurry for an electrical storage device electrode according to this embodiment for the purposes of imparting conductivity and buffering the volume change of the active material caused by the entrance and exit of lithium ions.

Specific examples of the conductive aid include carbons, such as activated carbon, acetylene black, ketjen black, furnace black, graphite, a carbon fiber, a fullerene, and a carbon nanotube. Of those, acetylene black, ketjen black, or a carbon nanotube may be preferably used. The content ratio of the conductive aid is preferably 20 parts by mass or less, more preferably from 1 part by mass to 15 parts by mass, particularly preferably from 2 parts by mass to 10 parts by mass with respect to 100 parts by mass of the active material.

<pH Adjusting Agent/Corrosion Inhibitor>

A pH adjusting agent and/or a corrosion inhibitor may be further added to the slurry for an electrical storage device electrode according to this embodiment for the purpose of suppressing the corrosion of a current collector depending on the kind of the active material.

Examples of the pH adjusting agent may include hydrochloric acid, phosphoric acid, sulfuric acid, acetic acid, formic acid, ammonium phosphate, ammonium sulfate, ammonium acetate, ammonium formate, ammonium chloride, sodium hydroxide, and potassium hydroxide. Of those, sulfuric acid, ammonium sulfate, sodium hydroxide, and potassium hydroxide are preferred. A pH adjusting agent selected from the neutralizers described in the production method for the polymer (A) may also be used.

Examples of the corrosion inhibitor may include ammonium metavanadate, sodium metavanadate, potassium metavanadate, ammonium metatungstate, sodium metatungstate, potassium metatungstate, ammonium paratungstate, sodium paratungstate, potassium paratungstate, ammonium molybdate, sodium molybdate, and potassium molybdate. Of those, ammonium paratungstate, ammonium metavanadate, sodium metavanadate, potassium metavanadate, and ammonium molybdate are preferred.

<Cellulose Fiber>

A cellulose fiber may be further added to the slurry for an electrical storage device electrode according to this embodiment. The addition of the cellulose fiber can improve the adhesiveness of the active material with respect to a current collector in some cases. It is conceived that the fibrous cellulose fiber can fibrously bind adjacent active materials to each other by linear adhesion or linear contact, and thus can prevent the detachment of the active material and can improve the adhesiveness thereof with respect to a current collector.

2.2.4. Preparation Method for Slurry for Electrical Storage Device Electrode

The slurry for an electrical storage device electrode according to this embodiment may be produced by any method as long as the slurry includes the above-mentioned binder composition for an electrical storage device and an active material. From the viewpoint of more efficiently and inexpensively producing a slurry having more satisfactory dispersibility and stability, the slurry is preferably produced by adding the active material and optionally added components to be used as required to the binder composition for an electrical storage device, and mixing the components. A specific example of the production method is a method described in JP 5999399 B2.

3. Electrical Storage Device Electrode

An electrical storage device electrode according to one embodiment of the present invention includes a current collector and an active material layer formed on the surface of the current collector by applying and drying the above-mentioned slurry for an electrical storage device electrode. Such electrical storage device electrode may be produced by applying the above-mentioned slurry for an electrical storage device electrode to the surface of the current collector such as metal foil to form a coating film, and then drying the coating film to form the active material layer. The electrical storage device electrode thus produced has the active material layer bound to the surface of the current collector, the active material layer containing the above-mentioned polymer (A), the active material, and optional components added as required, and hence can be reduced in internal resistance and is excellent in adhesiveness.

The current collector is not particularly limited as long as the current collector is formed of a conductive material, but an example thereof is a current collector described in JP 5999399 B2.

4. Electrical Storage Device

An electrical storage device according to one embodiment of the present invention includes the above-mentioned electrical storage device electrode and further includes an electrolytic solution, and may be produced in accordance with a conventional method using parts such as a separator. A specific example of the production method may be a method including: stacking together a negative electrode and a positive electrode via a separator; accommodating the stack in a battery container in a state of, for example, being wound or folded in accordance with a battery shape; injecting an electrolytic solution into the battery container; and sealing the battery container. The shape of the battery may be an appropriate shape, for example, a coin shape, a cylindrical shape, a square shape, or a laminate shape.

The electrolytic solution may be liquid or gel, and an electrolytic solution effectively expressing a function as a battery only needs to be selected from known electrolytic solutions to be used for electrical storage devices depending on the kind of the active material. The electrolytic solution may be a solution obtained by dissolving an electrolyte in an appropriate solvent. Examples of such electrolyte and solvent include compounds described in JP 5999399 B2.

The above-mentioned electrical storage device may be applied to, for example, a lithium ion secondary battery, an electric double layer capacitor, and a lithium ion capacitor each of which needs to be discharged at a high current density. Of those, a lithium ion secondary battery is particularly preferred. In the electrical storage device electrode and the electrical storage device according to the above-mentioned embodiments, known members for lithium ion secondary batteries, for electric double layer capacitors, or for lithium ion capacitors may be used as members other than the binder composition for an electrical storage device.

5. Examples

The present invention is specifically described below by way of Examples, but the present invention is by no means limited to these Examples. The terms "part(s)" and "%" in Examples and Comparative Examples are by mass unless otherwise stated.

5.1. Example 1

5.1.1. Preparation and Physical Property Evaluation of Binder Composition for Electrical Storage Device

(1) Preparation of Binder Composition for Electrical Storage Device

A binder composition for an electrical storage device including a polymer (A) was obtained by such one-stage polymerization as described below. A reaction vessel was loaded with 200 parts by mass of water, a monomer mixture formed of 26 parts by mass of 1,3-butadiene, 65 parts by mass of styrene, 2 parts by mass of acrylic acid, 2 parts by mass of itaconic acid, 1 part by mass of divinylbenzene, 3 parts by mass of acrylonitrile, and 1 part by mass of methyl methacrylate, 0.1 part by mass of tert-dodecyl mercaptan serving as a chain transfer agent, 0.2 part by mass of sodium dodecyl diphenyl ether disulfonate serving as an emulsifier, 0.3 part by mass of potassium persulfate and 0.1 part by mass of cumene hydroperoxide serving as polymerization initiators, 0.15 part by mass of sodium metabisulfite and 0.1 part by mass of L-ascorbic acid serving as reducing agents, and 0.001 part by mass of iron(II) sulfate heptahydrate, 0.01 part by mass of disodium dihydrogen ethylenediamine tetraacetate, and 0.002 part by mass of sodium dithionite serving as polymerization aids. Polymerization was started at 40°C while the materials were stirred. The temperature was increased to 80°C over 10 hours, and then polymerization was further performed at 80°C for 10 hours, and it was recognized that the polymerization conversion rate was 98%. The polymerization conversion rate was calculated according to a measurement method described below. Unreacted monomers were removed from the dispersion of particles of the polymer (A) thus obtained, and the remainder was concentrated. A 2.5% aqueous solution of sodium hydroxide was added thereto, and then water was removed with an evaporator. Thus, a binder composition for an electrical storage device including the particles of the polymer (A), the binder composition having a solid content concentration of 40 mass% and a pH of 8.0, was obtained.

(2) Measurement of Polymerization Conversion Rate

A reaction solution that had been subjected to polymerization for a predetermined time period was sampled and loaded into an aluminum dish ($X$ (g)) whose weight had been measured in advance, and the weight ($Y$ (g)) of the reaction solution was measured. The aluminum dish containing the reaction solution was dried with a hot-air dryer at 155°C for 15 minutes. The aluminum dish was taken out and left standing to cool, and then the weight ($Z$ (g)) of the aluminum dish was measured. A polymerization conversion rate was calculated by the following equation (4).

$$\text{Polymerization conversion rate}=((Z\text{-}X)/Y)\times100 \cdots\cdots (4)$$

(3) Measurement of Z-average Particle Diameter

The Z-average particle diameter of the particles of the polymer (A) was measured by using a dynamic light scattering method. That is, first, the binder composition for an electrical storage device obtained above was irradiated with laser light, and the intensity of scattered light scattered from the particles of the polymer (A) was measured with a time-dependent change in microseconds. Then, the detected scattered intensity distribution caused by the particles of the polymer (A) was fitted to a normal distribution, and the Z-average particle diameter of the polymer (A) was determined by a cumulant analysis method for calculating an average particle diameter. For the measurement of the Z-average particle diameter, a fiber-optics particle analyzer ("FPAR-1000", manufactured by Otsuka Electronics Co., Ltd.) was used. The particle analyzer is equipped with data analysis software, and is configured such that the data analysis software automatically analyzes measurement data to calculate the Z-average particle diameter. The measurement results are shown in Table 1. The value was rounded to the ones place.

(4) Measurement of T2

The binder composition for an electrical storage device obtained above was dried at 40°C for 24 hours to produce a uniform film having a thickness of $1.0\pm0.3$ mm. The film was dried in a vacuum dryer at 160°C for 30 minutes, and then a strip measuring 10 mm by 5 mm was cut out and used as a measurement sample. The measurement sample was loaded into a sample tube, and T2 at 100°C was calculated with a desktop TD-NMR (product name: "TD-NMR minispec mq20", manufactured by Bruker Corporation). The measurement results are shown in Table 1. In the calculation, the value was rounded to the third decimal place.

5.1.2. Preparation of Slurry for Electrical Storage Device Electrode

A twin-screw planetary mixer (manufactured by Primix Corporation, product name: "TK HIVIS MIX 2P-03") was loaded with 1 part by mass of a thickener (product name: "CMC2200", manufactured by Daicel Corporation) (value in terms of solid content, added as an aqueous solution having a concentration of 2 mass%), 4 parts by mass of the polymer (A) (value in terms of solid content, added as the binder composition for an electrical storage device obtained above), 95 parts by mass (value in terms of solid content) of artificial graphite (manufactured by Resonac Corporation, product name: "MAG"), which was highly crystalline graphite, serving as a negative electrode active material, and 1 part by mass of carbon (manufactured by Denka Company Limited, acetylene black) serving as a conductive aid, and the contents were stirred at 60 rpm for 1 hour to provide a paste. Water was charged to the resultant paste to adjust its solid content concentration to 48 mass%, and then the contents were stirred and mixed with a defoaming stirrer (manufactured by Thinky Corporation, product name: "Awatori Rentaro") at 200 rpm for 2 minutes, at 1,800 rpm for 5 minutes, and then under a reduced pressure (about $2.5\times10^4$ Pa) at 1,800 rpm for 1.5 minutes to prepare a slurry for an electrical storage device electrode.

5.1.3. Production and Evaluation of Electrical Storage Device

(1) Production of Electrical Storage Device Electrode (Negative Electrode)

The slurry for an electrical storage device electrode obtained above was uniformly applied to the surface of a current collector formed of copper foil having a thickness of 20 $\mu$m by a doctor blade method so that its film thickness after drying was 80 $\mu$m. The resultant was dried at 60°C for 10 minutes and then subjected to drying treatment at 120°C for 10 minutes. After that, press processing was performed with a roll pressing machine so that the density of an active material layer was 1.5 g/cm$^3$. Thus, an electrical storage device electrode (negative electrode) was obtained.

(2) Evaluation of Adhesive Strength of Negative Electrode Coating Layer

In the surface of the electrical storage device electrode (negative electrode) obtained above, ten cuts each having a depth extending from the active material layer to the current collector were made with a knife at intervals of 2 mm in each of longitudinal and latitudinal directions, to thereby make cuts in a grid shape. A pressure-sensitive adhesive tape having a width of 18 mm and a length of 18 mm (manufactured by Nichiban Co., Ltd., product name: "Cellotape" (registered trademark), specified in JIS Z 1522:2009) was attached to the cuts and immediately peeled off, and the degree of detachment of the active material was evaluated by visual judgment. Evaluation criteria are as described below. The evaluation results are shown in Table 1.

(Evaluation Criteria)

·Score 5: The number of detached pieces of the active material layer is 0.
·Score 4: The number of detached pieces of the active material layer is from 1 to 5.
·Score 3: The number of detached pieces of the active material layer is from 6 to 20.
·Score 2: The number of detached pieces of the active material layer is from 21 to 40.
·Score 1: The number of detached pieces of the active material layer is 41 or more.

(3) Production of Counter Electrode (Positive Electrode)

A twin-screw planetary mixer (manufactured by Primix Corporation, product name: "TK HIVIS MIX 2P-03") was loaded with 4 parts by mass (value in terms of solid content) of a binder for an electrochemical device electrode (manufactured by Kureha Corporation, product name: "KF Polymer #1120"), 3.0 parts by mass of a conductive aid (manufactured by Denka Company Limited, product name: "DENKA BLACK 50% press product"), 100 parts by mass (value in terms of solid content) of $LiCoO_2$ having an average particle diameter of 5 $\mu$m (manufactured by Hayashi Kasei Co., Ltd.) serving as a positive electrode active material, and 36 parts by mass of N-methylpyrrolidone (NMP), and the contents were stirred at 60 rpm for 2 hours. NMP was added to the resultant paste to adjust its solid content concentration to 65 mass%, and then the contents were stirred and mixed with a defoaming stirrer (manufactured by Thinky Corporation, product name: "Awatori Rentaro") at 200 rpm for 2 minutes, at 1,800 rpm for 5 minutes, and then under a reduced pressure (about $2.5 \times 10^4$ Pa) at 1,800 rpm for 1.5 minutes to prepare a slurry for a positive electrode. The slurry for a positive electrode was uniformly applied to the surface of a current collector formed of aluminum foil by a doctor blade method so that a film thickness after solvent removal was 80 $\mu$m. The solvent was removed by heating at 120°C for 20 minutes. After that, press processing was performed with a roll pressing machine so that the density of an active material layer was 3.0 g/cm$^3$. Thus, a counter electrode (positive electrode) was obtained.

(4) Assembly of Lithium Ion Battery Cell

In a glove box subjected to Ar purging so that a dew point was -80°C or less, the negative electrode produced above that had been punch-molded to a diameter of 16.16 mm was placed on a bipolar coin cell (manufactured by Hohsen Corp., product name: "HS Flat Cell"). Then, a separator formed of a porous film made of polypropylene that had been punched to a diameter of 24 mm (manufactured by Celgard, LLC, product name: "Celgard #2400") was placed. Further, 500 $\mu$L of an electrolytic solution was injected in such a manner as not to let air in. After that, the positive electrode produced above that had been punch-molded to a diameter of 15.95 mm was placed, and the exterior body of the bipolar coin cell was fastened with screws for sealing. Thus, a lithium ion battery cell (electrical storage device) was assembled. The electrolytic solution used in this case is a solution obtained by dissolving $LiPF_6$ at a concentration of 1 mol/L in a solvent containing ethylene carbonate and ethyl methyl carbonate at a mass ratio of 1/1.

(5) Evaluation of Resistance

For the electrical storage device produced above, in a thermostat controlled to a temperature of 60°C, charge was started at a constant current (1.0C). At the time point when the voltage reached 4.2 V, the charge was subsequently continued at a constant voltage (4.2 V). The time point when the current value reached 0.01C was defined as charge completion (cut-off). After that, discharge was started at a constant current (0.05C). The time point when the voltage reached 3.0 V was defined as discharge completion (cut-off), and a discharge capacity in the 0th cycle was calculated. Further, charge was started at a constant current (1.0C). At the time point when the voltage reached 4.2 V, the charge was subsequently continued at a constant voltage (4.2 V). The time point when the current value reached 0.01C was defined as charge completion (cut-off). After that, discharge was started at a constant current (1.0C). The time point when the voltage reached 3.0 V was defined as discharge completion (cut-off), and a discharge capacity in the 1st cycle was calculated. In this manner, charge and discharge were repeated 100 times. After charge and discharge had been repeated 100 times, charge and discharge were performed in the same manner as in the 0th cycle, and a discharge capacity in the 101st cycle was evaluated. A resistance increase rate was calculated by the following equation (5) and evaluated by the following criteria.

Resistance increase rate (%)

$$=(\text{discharge capacity in 100th cycle-discharge capacity in 101st cycle})/(\text{discharge capacity in 0th cycle-discharge capacity in 1st cycle})\times 100 \cdots\cdots (5)$$

(Evaluation Criteria)

·Score 5: The resistance increase rate is 100% or more and less than 150%.
·Score 4: The resistance increase rate is 150% or more and less than 200%.
·Score 3: The resistance increase rate is 200% or more and less than 250%.
·Score 2: The resistance increase rate is 250% or more and less than 300%.
·Score 1: The resistance increase rate is 300% or more and less than 350%.
·Score 0: The resistance increase rate is 350% or more.

In the measurement conditions, "1C" refers to a current value at which discharge is completed in 1 hour when a cell having a certain electric capacity is subjected to constant-current discharge. For example, "0.1C" refers to a current value at which discharge is completed in 10 hours, and "10C" refers to a current value at which discharge is completed in 0.1 hour.

5.2. Examples 2 to 13 and Comparative Examples 1 to 7

Binder compositions for electrical storage devices each having a solid content concentration of 40 mass% and including polymer particles were each obtained in the same manner as in the "5.1.1. Preparation and Physical Property Evaluation of Binder Composition for Electrical Storage Device (1) Preparation of Binder Composition for Electrical Storage Device" section except that the kinds and amounts of the respective monomers, and the polymerization temperature conditions were each changed as shown in Table 1 below to Table 3 below, and their respective physical properties were evaluated.

5.3. Evaluation Results

The polymer compositions used in Examples 1 to 13 and Comparative Examples 1 to 7, the measurement results of the respective physical properties, and the respective evaluation results are shown in Table 1 below to Table 3 below. The numerical values representing the polymer compositions shown in Table 1 below to Table 3 below each represent parts by mass.

Table 1

| | Classification | Monomer name | Example 1 | Example 2 | Example 3 | Example 4 | Example 5 | Example 6 | Example 7 |
|---|---|---|---|---|---|---|---|---|---|
| Polymer synthesis | Unsaturated carboxylic acid (a1) | AA | 2 | | | | | | 1.5 |
| | | MAA | | | 1 | | 1 | | |
| | | ITA | 2 | | 2 | 0.5 | | | 0.5 |
| | | FA | | | | | | 1 | |
| | Conjugated diene compound (a2) | BD | 26 | 45 | 5 | 65 | 45 | 10 | 37 |
| | | IP | | | | | 15 | | |
| | Aromatic vinyl compound (a3) | ST | 65 | 49 | 62 | 30 | 20 | 87 | 51 |
| | Ethylenically unsaturated monomer having two or more ethylenically unsaturated bonds (a4) | DVB | 1 | | 2 | | | | |
| | | EGDMA | | 2 | 2 | | 2 | | |
| | | AMA | | | 1 | | | 0.5 | |
| | | TMPTMA | | | | 3 | 3 | | |
| | $\alpha,\beta$-Unsaturated nitrile compound (a5) | AN | 3 | | | | 3 | | 3 |
| | | MAN | | | 5 | | | | |
| | | FN | | 1.5 | | | 4 | | |
| | Unsaturated carboxylic acid ester (a6) | MMA | 1 | | | | 3 | | 7 |
| | | BA | | | 17 | | | 1 | |
| | (Meth)acrylamide (a7) | Am | | 1.5 | | | | 0.5 | |
| | | MAm | | | | 1.5 | | | |
| | Compound having sulfonic acid group (a8) | NASS | | 1 | 3 | | 4 | | |
| | Total of monomers | | 100 | 100 | 100 | 100 | 100 | 100 | 100 |
| | Initiator | KPS | 0.3 | 0.3 | 1.2 | 0.3 | 0.6 | | |
| | | CHP | 0.1 | 0.1 | | 0.1 | 0.1 | | 0.3 |
| | | ACVA | | | | | | 0.5 | |
| | Reducing agent | $Na_2S_2O_5$ | 0.15 | 0.15 | 1 | 0.1 | 0.3 | | |
| | | ACA | 0.1 | 0.1 | | 0.1 | 0.1 | | 0.3 |

(continued)

| | Classification | Monomer name | Example 1 | Example 2 | Example 3 | Example 4 | Example 5 | Example 6 | Example 7 |
|---|---|---|---|---|---|---|---|---|---|
| | Chain transfer agent | tDM | 0.1 | 0.05 | 0.2 | 0.01 | 0.1 | | 0.6 |
| | | $\alpha$MSD | | 0.1 | | | 0.5 | | |
| | Other polymerization aids | $NaHCO_3$ | | | | | | 0.5 | |
| | | $FeSO_4$ | 0.001 | 0.001 | | 0.001 | 0.001 | | 0.001 |
| | | EDTA-2Na | 0.01 | 0.01 | | 0.01 | 0.01 | | 0.01 |
| | | $Na_2S_2O_4$ | 0.002 | 0.002 | | 0.03 | | | 0.01 |
| | Polymerization start temperature (°C) | | 40 | 40 | 50 | 35 | 35 | 60 | 40 |
| | Polymerization end temperature (°C) | | 80 | 65 | 80 | 70 | 85 | 85 | 65 |
| Physical properties | T2 at 100°C (msec) | | 0.53 | 0.61 | 0.3 | 0.55 | 0.39 | 0.47 | 0.78 |
| | Z-average particle diameter (nm) | | 120 | 150 | 160 | 80 | 140 | 170 | 130 |
| | Calculated value of equation (2) | | 88.7 | 88.3 | 74.6 | 98.9 | 80.3 | 80.8 | 97.6 |
| Evaluation results | Evaluation of adhesive strength | | 5 | 4 | 4 | 5 | 4 | 4 | 5 |
| | Evaluation of resistance | | 4 | 4 | 5 | 4 | 5 | 5 | 4 |

Table 2

| | Classification | Monomer name | Example 8 | Example 9 | Example 10 | Example 11 | Example 12 | Example 13 |
|---|---|---|---|---|---|---|---|---|
| Polymer synthesis | Unsaturated carboxylic acid (a1) | AA | 0.5 | 2 | | | 2 | |
| | | MAA | 0.5 | | 1 | 1 | | 1 |
| | | ITA | | | | | 2 | 1.5 |
| | | FA | 1 | | | | | 1 |
| | Conjugated diene compound (a2) | BD | 34 | 26 | 58 | 10 | 31 | 52 |
| | | IP | | | 5 | | | |
| | Aromatic vinyl compound (a3) | ST | 48 | 69.5 | 25 | 80 | 50 | 40 |
| | Ethylenically unsaturated monomer having two or more ethylenically unsaturated bonds (a4) | DVB | 5 | 2.5 | | | 1 | |
| | | EGDMA | | | | | | |
| | | AMA | 7 | | | 3 | | 0.5 |
| | | TMPTMA | | | 8 | | | |
| | $\alpha,\beta$-Unsaturated nitrile compound (a5) | AN | | | | | 10 | 3 |
| | | MAN | | | 2 | | 3 | |
| | | FN | 2 | | | | | |
| | Unsaturated carboxylic acid ester (a6) | MMA | | | | | | 1 |
| | | BA | | | | 5 | | |
| | (Meth)acrylamide (a7) | Am | 1 | | | | | |
| | | MAm | | | 1 | | 0.5 | |
| | Compound having sulfonic acid group (a8) | NASS | 1 | | | 1 | 0.5 | |
| | Total of monomers | | 100 | 100 | 100 | 100 | 100 | 100 |
| | Initiator | KPS | 1.2 | 0.4 | | 0.3 | 0.6 | 0.3 |
| | | CHP | 0.05 | 0.1 | | 0.1 | 0.1 | 0.1 |
| | | ACVA | | | 0.5 | | | |
| | Reducing agent | $Na_2S_2O_5$ | 1 | | | 0.15 | 0.3 | 0.15 |
| | | ACA | 0.05 | 0.1 | | 0.1 | 0.1 | 0.1 |
| | Chain transfer agent | tDM | 0.1 | 0.5 | | 0.1 | 0.1 | 0.6 |
| | | $\alpha$MSD | 0.3 | | | | | |
| | Other polymerization aids | $NaHCO_3$ | | | 2 | | | |
| | | $FeSO_4$ | 0.001 | 0.001 | | 0.001 | 0.001 | 0.001 |
| | | EDTA-2Na | 0.01 | 0.01 | | 0.02 | 0.005 | 0.01 |
| | | $Na_2S_2O_4$ | 0.005 | 0.005 | | 0.002 | 0.004 | 0.002 |
| | Polymerization start temperature (°C) | | 50 | 40 | 50 | 40 | 60 | |
| | Polymerization end temperature (°C) | | 80 | 80 | 80 | 80 | 80 | |

(continued)

| | Classification | Monomer name | Example 8 | Example 9 | Example 10 | Example 11 | Example 12 | Example 13 |
|---|---|---|---|---|---|---|---|---|
| Physical properties | T2 at 100°C (msec) | | | 0.28 | 0.33 | 0.52 | 0.3 | 0.55 |
| | Z-average particle diameter (nm) | | | 130 | 170 | 370 | 40 | 70 |
| | Calculated value of equation (2) | | | *77.0* | 75.0 | 75.7 | 116.6 | 102.9 |
| Evaluation results | Evaluation of adhesive strength | | | 3 | 4 | 3 | 3 | 5 |
| | Evaluation of resistance | | | 5 | 5 | 5 | 4 | 3 |

Table 3

| Classification | Monomer name | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Unsaturated carboxylic acid (a1) | AA | 6 | | 6 | 2 | 10 | | 4 |
| | MAA | | | | 2 | 5 | 3 | 2 |
| | ITA | | | | | | 3 | |
| | FA | 2 | 2 | 2 | | | | 2 |
| Conjugated diene compound (a2) | BD | 26 | 50 | 50 | 26 | 5 | 30 | 65 |
| | IP | | | | | | | |
| Aromatic vinyl compound (a3) | ST | 61 | 41 | 37 | 65 | 30 | 20 | 15 |
| Ethylenically unsaturated monomer having two or more ethylenically unsaturated bonds (a4) | DVB | 1 | 1 | 1 | 1 | | | |
| | EGDMA | | | | | | | |
| | AMA | | | | | 10 | 5 | |
| | TMPTMA | | | | | | | |
| $\alpha,\beta$-Unsaturated nitrile compound (a5) | AN | 3 | 3 | 3 | 3 | 10 | 5 | |
| | MAN | | | | | | | 5 |
| | FN | | | | | | 5 | |
| Unsaturated carboxylic acid ester (a6) | MMA | 1 | 1 | 1 | 1 | | 10 | 5 |
| | BA | | | | | 25 | 15 | |
| (Meth)acrylamide (a7) | Am | | | | | | 2 | 2 |
| | MAm | | | | | | | |
| Compound having sulfonic acid group (a8) | NASS | | | | | 5 | 2 | |
| | Total of monomers | 100 | 100 | 100 | 100 | 100 | 100 | 100 |
| Polymer synthesis — Initiator | KPS | 0.3 | 0.2 | 1.2 | 0.3 | 0.3 | 0.6 | |
| | CHP | | | | | 0.1 | 0.1 | |
| | ACVA | | | | | | | 0.5 |

| | Classification | Monomer name | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| | Reducing agent | $Na_2S_2O_5$ | 0.15 | | 1 | | 0.15 | 0.3 | |
| | | ACA | | 0.2 | | 0.3 | 0.1 | 0.1 | |
| | Chain transfer agent | tDM | 0.3 | 0.05 | 0.1 | 0.1 | 0.1 | 0.1 | 0.2 |
| | | αMSD | | 0.3 | | 0.5 | | | |
| | Other polymerization aids | $NaHCO_3$ | | | | | | | 0.5 |
| | | $FeSO_4$ | 0.001 | 0.001 | | | 0.001 | 0.001 | |
| | | EDTA-2Na | 0.01 | 0.02 | | | 0.01 | 0.005 | |
| | | $Na_2S_2O_4$ | 0.002 | 0.002 | | | 0.002 | 0.002 | |
| Physical properties | Polymerization start temperature (°C) | | 40 | 50 | 40 | 40 | 40 | 35 | 70 |
| | Polymerization end temperature (°C) | | 80 | 80 | 70 | 80 | 80 | 70 | 70 |
| | T2 at 100°C (msec) | | 0.5 | 1.08 | 0.81 | 0.87 | 0.83 | 0.94 | 1.21 |
| | Z-average particle diameter (nm) | | 115 | 165 | 100 | 140 | 125 | 120 | 200 |
| | Calculated value of equation (2) | | 88.3 | 106.2 | 104.0 | 100.0 | 100.3 | 105.6 | 109.2 |
| Evaluation results | Evaluation of adhesive strength | | 1 | 3 | 1 | 2 | 1 | 1 | 2 |
| | Evaluation of resistance | | 4 | 1 | 1 | 2 | 2 | 1 | 1 |

EP 4 726 812 A1

The abbreviations of the monomers and the thickeners in Table 1 above to Table 3 above represent the following compounds.

<Unsaturated Carboxylic Acid>

·AA: acrylic acid
·MAA: methacrylic acid
·ITA: itaconic acid
·FA: fumaric acid

<Conjugated Diene Compound>

·BD: 1,3-butadiene
·IP: isoprene

<Aromatic Vinyl Compound>

·ST: styrene

<Ethylenically Unsaturated Monomer having Two or more Ethylenically Unsaturated Bonds>

·DVB: divinylbenzene
·EGDMA: ethylene glycol dimethacrylate
·AMA: allyl methacrylate
·TMPTMA: trimethylolpropane trimethacrylate

<$\alpha,\beta$-Unsaturated Nitrile Compound>

·AN: acrylonitrile
·MAN: methacrylonitrile
·FN: fumaronitrile

<Unsaturated Carboxylic Acid Ester>

·MMA: methyl methacrylate
·BA: butyl acrylate

<(Meth)acrylamide>

·Am: acrylamide
·MAm: methacrylamide

<Compound having Sulfonic Acid Group>

·NASS: sodium styrenesulfonate

<Initiator>

·KPS: potassium persulfate
·CHP: cumene hydroperoxide
·ACVA: 4,4'-azobis(4-cyanovaleric acid)

<Reducing Agent>

·$Na_2S_2O_5$: sodium metabisulfite
·ACA: L-ascorbic acid

<Chain Transfer Agent>

·tDM: tert-dodecyl mercaptan
·αMSD: α-methylstyrene dimer

<Other Polymerization Aids>

·$NaHCO_3$: sodium hydrogen carbonate
·$FeSO_4$: iron(II) sulfate heptahydrate
·EDTA-2Na: disodium dihydrogen ethylenediamine tetraacetate
·$Na_2S_2O_4$: sodium dithionite

As apparent from Table 1 above to Table 3 above, the electrical storage device electrodes produced by using the binder compositions for electrical storage devices according to the present invention shown in Examples 1 to 13 were each able to be reduced in internal resistance as compared to the cases of Comparative Examples 1 to 7 because fusion between particles in the electrode was able to be reduced by suitably binding the active materials to each other. The polymer (A) included in each of the binder compositions for electrical storage devices of Examples 1 to 13 shown in Table 1 above and Table 2 above has a T2 value that falls within the range of 0.8 or less as compared to those of Comparative Examples 1 to 7 shown in Table 3 above, and this value suggests that the mobility of a polymer chain is low. It is presumed that, as a result of the foregoing, the particle shape of the binder was able to be maintained in the electrode to prevent the inhibition of the permeation of the electrolytic solution between the active materials, and hence the resistance was reduced.

The present invention is not limited to the embodiments described above, and various modifications may be made thereto. The present invention encompasses substantially the same configurations as the configurations described in the embodiments (e.g., configurations having the same functions, methods, and results, or configurations having the same objects and effects). The present invention also encompasses configurations obtained by replacing non-essential parts of the configurations described in the embodiments with other configurations. The present invention also encompasses configurations exhibiting the same actions and effects or configurations capable of achieving the same objects as those of the configurations described in the embodiments. The present invention also encompasses configurations obtained by adding known technologies to the configurations described in the embodiments.

**Claims**

1. A binder composition for an electrical storage device, comprising:

   a polymer (A); and
   a liquid medium (B),
   wherein a value of a spin-spin relaxation time (T2) of the polymer (A) measured by pulsed NMR is 0.8 msec or less at 100°C, and
   wherein, with respect to 100 mass% in total of repeating units contained in the polymer (A), the polymer (A) contains 0 mass% or more and 4 mass% or less of a repeating unit (a1) derived from an unsaturated carboxylic acid.

2. The binder composition for an electrical storage device according to claim 1, wherein the polymer (A) further contains 10 mass% to 60 mass% of a repeating unit (a2) derived from a conjugated diene compound.

3. The binder composition for an electrical storage device according to claim 1 or 2, wherein the polymer (A) further contains 30 mass% to 85 mass% of a repeating unit (a3) derived from an aromatic vinyl compound.

4. The binder composition for an electrical storage device according to claim 1 or 2, wherein the polymer (A) further contains a repeating unit (a4) derived from an ethylenically unsaturated monomer having two or more ethylenically unsaturated bonds.

5. The binder composition for an electrical storage device according to claim 1 or 2, wherein the liquid medium (B) is water.

6. The binder composition for an electrical storage device according to claim 1 or 2,

   wherein the polymer (A) is polymer particles, and
   wherein the polymer particles have a Z-average particle diameter of 50 nm or more and 500 nm or less.

7. The binder composition for an electrical storage device according to claim 6, wherein the polymer particles satisfy a relationship of the following formula (3):

$$41.1 \times T2 + 2{,}237.4 \div PS + 48.3 < 100 \quad \cdots\cdots (3)$$

   in the formula (3), T2 represents a value of a spin-spin relaxation time (T2) of the polymer particles at 100°C measured by pulsed NMR, and PS represents a Z-average particle diameter (nm) of the polymer particles.

8. A slurry for an electrical storage device electrode, comprising:

   the binder composition for an electrical storage device of claim 1 or 2; and
   an active material.

9. An electrical storage device electrode, comprising:

   a current collector; and
   an active material layer formed on a surface of the current collector by applying and drying the slurry for an electrical storage device electrode of claim 8.

10. An electrical storage device, comprising the electrical storage device electrode of claim 9.

## INTERNATIONAL SEARCH REPORT

| International application No. |
|---|
| **PCT/JP2024/019644** |

### A. CLASSIFICATION OF SUBJECT MATTER

*H01M 4/62*(2006.01)i; *C08F 212/02*(2006.01)i; *C08F 212/36*(2006.01)i; *C08F 220/04*(2006.01)i; *C08F 220/12*(2006.01)i; *C08F 220/20*(2006.01)i; *C08F 222/02*(2006.01)i; *C08F 236/04*(2006.01)i; *H01G 11/38*(2013.01)i; *H01M 4/13*(2010.01)i; *H01M 4/139*(2010.01)i

FI:  H01M4/62 Z; C08F212/02; C08F212/36; C08F220/04; C08F220/12; C08F220/20; C08F222/02; C08F236/04; H01G11/38; H01M4/13; H01M4/139

According to International Patent Classification (IPC) or to both national classification and IPC

### B. FIELDS SEARCHED

Minimum documentation searched (classification system followed by classification symbols)

H01M4/62; C08F212/02; C08F212/36; C08F220/04; C08F220/12; C08F220/20; C08F222/02; C08F236/04; H01G11/38; H01M4/13; H01M4/139

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2017-126456 A (NIPPON A & L INC.) 20 July 2017 (2017-07-20) | 1-10 |
| A | JP 2020-85776 A (TOYO TIRE CORPORATION) 04 June 2020 (2020-06-04) | 1-10 |
| A | JP 2014-235798 A (MITSUBISHI RAYON CO., LTD.) 15 December 2014 (2014-12-15) | 1-10 |
| A | WO 2015/119085 A1 (SHOWA DENKO K.K.) 13 August 2015 (2015-08-13) | 1-10 |
| A | WO 2022/034901 A1 (DENKA CO., LTD.) 17 February 2022 (2022-02-17) | 1-10 |

☐ Further documents are listed in the continuation of Box C.  ☑ See patent family annex.

| | | |
|---|---|---|
| \* | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **05 August 2024** | **20 August 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/019644**

| Patent document<br>cited in search report | Publication date<br>(day/month/year) | Patent family member(s) | Publication date<br>(day/month/year) |
|---|---|---|---|
| JP 2017-126456 A | 20 July 2017 | (Family: none) | |
| JP 2020-85776 A | 04 June 2020 | (Family: none) | |
| JP 2014-235798 A | 15 December 2014 | (Family: none) | |
| WO 2015/119085 A1 | 13 August 2015 | (Family: none) | |
| WO 2022/034901 A1 | 17 February 2022 | US 2023/0348646 A1<br>EP 4198087 A1<br>CN 116034137 A<br>KR 10-2023-0050409 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015012366 A1
- JP 2017126456 A
- JP 2020085776 A
- JP 5999399 B
- JP 5477610 B
- JP 2020184461 A